# EUROPEAN PATENT SPECIFICATION

(11) **EP 2 203 268 B1**
(45) Date of publication and mention of the grant of the patent: **02.07.2014**
(21) Application number: 08803242.0
(22) Date of filing: 27.08.2008
(51) Int. Cl.: B23B 5/12

(54) **DEVICE AND METHOD TO ADJUST THE RADIAL POSITION OF THE TOOLS IN A PEELING MACHINE FOR BARS, TUBES OR SIMILAR OBLONG WORKPIECES**
WERKZEUG-RADIALLAGEEINSTELLUNGSVORRICHTUNG UND -VERFAHREN IN EINER SCHÄLMASCHINE FÜR STANGEN, RÖHREN ODER ÄHNLICHE, LÄNGLICHE WERKSTÜCKE
DISPOSITIF ET PROCÉDÉ POUR AJUSTER LA POSITION RADIALE DES OUTILS DANS UNE DÉROULEUSE POUR BARRES, TUBES OU AUTRES PIÈCES À TRAVAILLER ANALOGUES

(30) Priority: 10.09.2007 IT UD20070162
(43) Date of publication of application: 07.07.2010
(73) Proprietor: Danieli & C. Officine Meccaniche SpA, 33042 Buttrio (Udine) (IT)
(72) Inventor: MATTANZA, Carlo, I-25100 Brescia (IT); LAVARONI, Andrea, I-33047 Remanzacco (IT)
(74) Representative: Petraz, Davide Luigi
(86) International application number: PCT/EP2008/061175
(87) International publication number: WO 2009/033948

(56) References cited:
- EP-A- 0 047 362
- EP-A- 0 348 719
- DE-A1- 1 752 341
- DE-A1- 2 904 483

## Description

### FIELD OF THE INVENTION

The present invention concerns a device and method to adjust the radial position of the tools in a peeling machine for bars, tubes or similar oblong products, in which the tools are disposed radially on a rotary head, in a central cavity of which the product to be worked or being worked is able to run, drawn and/or thrust by feed means. The tools are able to reduce the diameter of the product to be worked, by removing chip. A first motor means is able to make the tool-bearing head rotate. The device comprises essentially a kinematic-differential unit, connected to second motor means, and control means, connected at least to the second motor means, in order to selectively cause the simultaneous and radial displacement of the tools and thus adjust their distance from the product to be worked, also while the tool-bearing head is rotating (see for example EP-A-0047362). BACKGROUND OF THE INVENTION

The peeling machine is a machine tool which removes chip, with functions similar to those of a lathe. Whereas in the lathe the piece to be worked rotates and a single tool performs the relative feed, in the peeling machine there are a plurality of tools that rotate around the piece while it advances.

The tools, also called inserts or cutters, are normally rectangular in shape, or triangular, and are mounted on suitable insert-bearing cartridges.

Peeling machines are known in which the tools are adjusted radially by means of a conical bushing or a worm screw; however, both these known solutions do not allow to annul the plays, and this is a disadvantage for the working accuracy and therefore for the tolerances in size and, mainly, shape (in particular the triangular nature which the market requires, with minimum values to reduce times and costs of grinding and other finishing) amplified by the defects caused by rolling and other productive processes which, with current techniques, are not completely eliminated.

Furthermore, due to the imperfect radial adjustment of the cutters, unwanted helical impressions are generated on the piece worked.

Another disadvantage of known peeling machines is that the axial movement of the conical bushing, which is transformed into a radial movement of the tools, generates an axial thrust on the mandrel bearings, contrary to the working thrust, with a consequent instability on the bearings and with negative repercussions on the accuracy of the product being worked.

One purpose of the present invention is to achieve a peeling machine which has a good rigidity, so that there is no play in the axial adjustment mechanisms of the tools, to obtain more precise tolerances of size and shape (viz. triangular) of the worked product, given the same conditions, compared with the state of the art.

Another purpose of the present invention is to obtain great sensitivity and considerable accuracy in the adjustment of the tools, and to allow to adjust the tools without causing axial forces that negatively affect the mandrel bearings.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purpose the present invention provides an adjustment device according to claim 1. The adjustment device according to the present invention is able to be used in a peeling machine for bars, tubes or similar oblong products to be worked, in which the peeling machine comprises a plurality of tools, feed means, able to feed axially each product to be worked or being worked, along a longitudinal axis thereof, and a rotary head, which is provided with a central through cavity, in which the product to be worked or being worked is able to run, and which is able to rotate with respect to a fixed support, coaxially to the longitudinal axis, commanded by first motor means, and in which the tools are mounted on the rotary head and are associated with corresponding adjustment units. In particular, the adjustment device comprises: second motor means, able to drive the adjustment units; a kinematic-differential unit interposed between the second motor means and the adjustment units; and control means, associated at least with the second motor means, to cause the selective and simultaneous activation of the adjustment units and thus to effect the micrometric adjustment of the radial position of the tools with respect to the longitudinal axis, also while the rotary head is rotating.

Advantageously, the first motor means comprises a continuous current electric motor, and the second motor means comprises a brushless electric motor.

Furthermore, advantageously, the kinematic-differential unit comprises a differential member, connected both to the first motor means, in order to rotate normally in synchrony with the rotary head, and also to the second motor means, which is able to act selectively on the internal pinions of the differential, so as to add or subtract revs to the output member of the latter and thus to activate the units to adjust the mandrels.

The kinematic-differential unit also comprises a plurality of toothed wheels, engaging with each other and having transmission ratios such that a determinate micrometric radial displacement of the tools (for example 0.01 mm) corresponds to a determinate angle of rotation of said second motor means (for example 22.5° of the brushless motor).

According to another characteristic feature of the present invention, the control means is associated with a means to detect the actual diameter of the worked product, so as to intervene automatically on the second motor means and to adjust the radial position of the tools, until the actual diameter of the worked product becomes equal to the preset diameter.

The present invention further provides an adjustment method according to claim 8.

The adjustment method according to the present invention, also innovative, comprises a first step of making the rotary head and tools rotate, by means of the first motor means, and simultaneously of axially feeding the product to be worked, by means of the feed means, and advantageously also the following steps:
- detecting, downstream of the tools, the actual diameter of the worked product and sending the data to a control unit which compares the data with the value of the preset diameter;
- selectively activating a radial adjustment device to adjust the tools so that a second motor means drives the adjustment units of the latter, by means of a kinematic-differential unit, also while the rotary head and the tools are rotating.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a schematic view of an adjustment device according to the present invention to adjust the tools of a peeling machine for bars, tubes or similar oblong products;
- fig. 2 is a block diagram of some components of the machine in fig. 1.

### DETAILED DESCRIPTION OF A PREFERENTIAL FORM OF EMBODIMENT

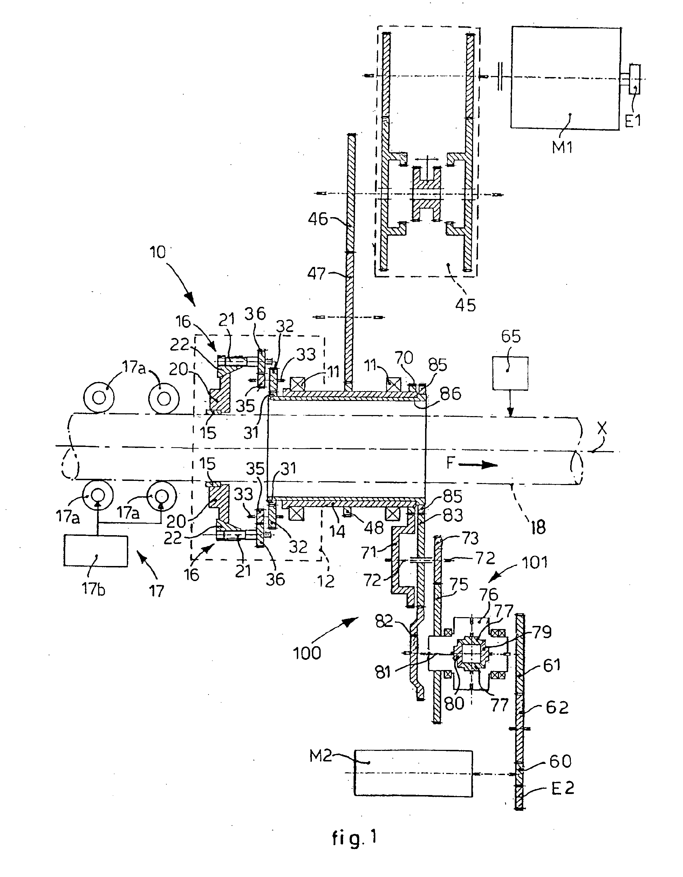

With reference to fig. 1, an adjustment device 100 according to the present invention is shown mounted on a peeling machine 10, to adjust the radial position of the tools 15 of the latter with respect to a product to be worked or being worked 18, which can be for example a bar, a tube, or a similar oblong product, having a longitudinal axis X and a circular cross section.

The peeling machine 10 is for example of the type described in the patent of industrial invention filed by the present Applicant at the same time as the present application.

The peeling machine 10 comprises a rotary head 12, indicated schematically by the dashes in fig. 1, which is associated with a mandrel 14, rotatable on a fixed support 11, shown schematically only representing its relative supporting bearings.

Each tool 15 is associated with a corresponding adjustment unit 16, essentially consisting of a slider 20, mobile radially with respect to the longitudinal axis X and on which a corresponding tool 15 is mounted, a calibrated screw 21 and a wedge shaped hub 22, connected to the slider 20 and on which the calibrated screw 21 is screwed.

Furthermore, the peeling machine 20 comprises feed means 17, for example consisting of feed rollers 17a commanded by a command member 17b which, in a known manner, are able to feed the product to be worked 18 along the longitudinal axis X in the direction indicated by the arrow F.

A first motor means, for example comprising a continuous current electric motor M1, associated with a rotate synchronization device or encoder E1, is able to make the rotary head 12 rotate with respect to the fixed support 11 and the product to be worked 18. In particular, the electric motor M1 is connected by means of a speed gear 45 and two toothed guide wheels 46 and 47, to a toothed wheel 48, solid with the mandrel 14.

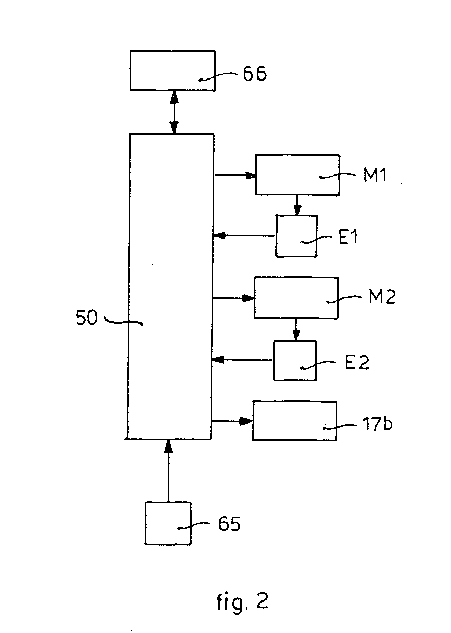

The motor M1 and the encoder E1 are in turn connected electrically to a control unit 50 (fig. 2), having inside a processor of a known type and not shown in the drawings, for example a PLC.

The adjustment device 100 (fig. 1) comprises second motor means comprising for example a brushless electric motor M2, of a known type, having a toothed pinion 60 connected to a synchronization device, or encoder E2, and to a toothed wheel 61 by means of a toothed guide wheel 62.

The electric motor M2 and the encoder E2 are also connected to the control unit 50 (fig. 2). Furthermore, a laser device 65, positioned downstream of the tools 15 and the mandrel 14 (fig. 1), and a control panel 66 (fig. 2), of a known type and provided with a console with a keyboard, are also connected to the control unit 50.

The function of the laser device 65 is to constantly control the actual size of the product already worked 18 (fig. 1), and to send the data to the control unit 50 (fig. 2), which is programmed to define the adjustment values of the tools 15 (fig. 1) according to the discrepancy between the programmed size and the actual size of the product 18, which could be different due to the wear on the tools 15.

The adjustment device 100 also comprises a kinematic-differential unit 101, which in turn comprises a toothed wheel 70 keyed onto the mandrel 14 and engaging with a toothed wheel 71. A toothed wheel 73 is also keyed onto the shaft 72 of the toothed wheel 71, and in turn commands a toothed wheel 75, having a number of teeth double that of the toothed wheel 73, so that the number of revs is halved.

The toothed wheel 75 is solid with a carrier of a differential 76 that carries inside it two conical pinions 77 (satellites), which are able to effect a revolution on a conical pinion 79.

The conical pinion 79 is normally static, because it is connected to the brushless motor M2, which is normally stationary while remaining active, waiting to receive a signal to adjust the tools 15 from the control unit 50 (fig. 2).

The two conical pinions 77 (fig. 1) are mounted idle on the carrier of the differential 76 so that, engaging with the static conical pinion 79, they are able to perform not only a rotation together with the carrier of the differential 76 but also a revolution around the conical pinion 79.

On the side opposite the conical pinion 79, another conical pinion 80 is disposed engaging with the two conical pinions 77. In this way the two pinions 77 transmit to the conical pinion 80 a double rotation with respect to that of the carrier of the differential 76, returning the number of revs equal to that of the toothed wheel 73.

On the shaft 81 of the conical pinion 80 a toothed wheel 82 is keyed, which, by means of an intermediate toothed wheel 83, is able to make rotate a toothed wheel 85 having the same number of revs as the toothed wheel 70.

Moreover, the kinematic-differential unit 101 comprises a pipe 86, coaxial with the mandrel 14 and on which, at the two ends, the toothed wheel 85 and a toothed wheel 31 are keyed.

A toothed wheel 32 for each tool 15 engages with the toothed wheel 31. Each toothed wheel 32 has a shaft 33 mounted rotatable on the rotary head 12 and on which a second toothed wheel 35 is also keyed, smaller than the corresponding toothed wheel 32 and in turn engaging with a toothed wheel 36, coaxially solid with the corresponding calibrated screw 21.

The radial adjustment of the tools 15 with respect to the longitudinal axis X is done as follows.

In normal operating conditions, the continuous current motor M1 rotates, controlled by the control unit 50, and the brushless motor M2 is still. In this condition, because the toothed wheel 70 of the mandrel 14 and the toothed wheel 85 rotate at the same number of revs, the tools 15 maintain a determinate radial position with respect to the longitudinal axis X.

When the radial position of the tools 15 is to be changed, and hence the diameter of the product 18 being worked, it is necessary to feed the brushless motor M2 and make its pinion 60 rotate, in a clockwise or anti-clockwise direction, so as to decrease or increase respectively the diameter of the product 18 being worked.

This adjustment operation can be carried out also while the rotary head 12 and the mandrels 15 are rotating, that is, without stopping the motor M1.

In particular, the adjustment of the radial position of the tools 15 is performed as follows:
1) The control unit 50, activated by the laser device 65, or by the operator, by means of the panel 66, makes the brushless motor M2 rotate, making it perform a number of revs and/or a fraction of a rev equal to the desired correction. In this case, the value of correction on the diameter of the product 18 is equal to 0.01 mm for every 22.5 degrees of rotation of the brushless motor M2, that is, for every sixteenth of a degree.
2) the encoder E2 controls the rotation of the brushless motor M2.
3) The toothed pinion 60 transmits the rotation to the toothed wheels 62 and 61.
4) The toothed wheel 61 makes the conical pinion 79 rotate, which increases or reduces speed to the conical pinion 80, connected to the toothed wheel 82.
5) The toothed wheel 82, by means of the toothed wheel 83 and the toothed wheel 85, increases or reduces speed to the tube 86 which, by means of the toothed wheels 31, 32, 35 and 36, makes the calibrated screws 21 rotate to the left or to the right.
6) Each calibrated screw 21, rotating, displaces the wedge-shaped hub 22 forward or backward, which in turn moves radially the slider 20, on which a corresponding tool 15 is mounted, with a consequent variation in the diameter of the product 18.

It is clear that modifications and/or additions of parts may be made to the adjustment device 100 as described heretofore, without departing from the scope of the present invention, which is defined by the appended claims.

It is also clear that, although the present invention has been described with reference to some specific examples, a person of skill in the art shall certainly be able to achieve many other equivalent forms of adjustment device, having the characteristics as set forth in the claims and hence all coming within the field of protection defined thereby.

## Claims

1. Adjustment device for the radial adjustment of the tools (15) in a peeling machine (10) for bars, tubes or similar oblong products to be worked (18), wherein said peeling machine (10) comprises feed means (17) able to make each product to be worked (18) advance axially along a longitudinal axis (X) thereof, and a rotary head (12), which is provided with a central through cavity (13), in which said product to be worked (18) is able to run, and is able to rotate with respect to a fixed support (11), coaxially with said longitudinal axis (X), commanded by first motor means (M1), and wherein said tools (15) are mounted on said rotary head (12) and associated with corresponding adjustment units (16), said device comprising second motor means (M2), able to drive said adjustment units (16), the device also comprising a kinematic-differential unit (101) interposed between said second motor means (M2) and said adjustment units (16) and control means (50) associated at least with said second motor means (M2), so as to cause the selective and simultaneous activation of said adjustment units (16) and to effect the micrometric adjustment of the radial position of said tools (15) with respect to said longitudinal axis (X), also while said rotary head (12) is rotating, **characterized in that** each of said adjustment unit (16) comprises a slider (20), mobile radially with respect to said longitudinal axis X and on which one of said tool (15) is mounted, a calibrated screw (21) and a wedge shaped hub (22) connected to the slider (20) and on which the calibrated screw (21) is screwed, and **in that** a rotation of said second motor means (M2) is transmitted to said calibrated screw (21) by means of toothed wheels (62, 61, 82, 83, 31, 32, 35, 36) in order to make said calibrated screw (21) to rotate to the left or to the right, thus moving the hub (22), and in turn the slider (20) and the relative tool (15), with a consequent variation in the diameter of the product (18).

2. Adjustment device as in claim 1, **characterized in that** said second motor means comprises a brushless electric motor (M2).

3. Adjustment device as in claim 1 or 2, **characterized in that** said kinematic-differential unit (101) comprises a differential member (56), connected both to said first motor means (M1), in order to rotate normally in synchronism with said rotary head (12), and also to said second motor means (M2).

4. Adjustment device as in claim 3, **characterized in that** said second motor means (M2) is able to act selectively on the internal pinions of said differential member (56), in order to add or subtract revs to the output member of said differential (56) and to activate said units (16) to adjust said tools (15).

5. Adjustment device as in any claim hereinbefore, **characterized in that** said kinematic-differential unit (100) comprises a plurality of said toothed wheels, engaging with each other and having transmission ratios such that a determinate micrometric radial displacement of said tools (15) corresponds to a determinate angle of rotation of said second motor means (M2).

6. Adjustment device as in any claim hereinbefore, **characterized in that** said control means (50) is associated with a means to detect the actual diameter of said worked product (18), in order to intervene automatically on said second motor means (M2) and to adjust the radial position of said tools (15), until the actual diameter of said worked product (18) becomes substantially equal to the preset diameter.

7. Adjustment device as in claim 6, **characterized in that** said detection means comprises a laser device (65) disposed in correspondence with the surface of said product being worked (18), downstream of said tools (15).

8. Method for the radial adjustment of the tools (15) in a peeling machine (10) for bars, tubes or similar oblong products to be worked (18), by using an adjustment device as claimed in claim 1, wherein said peeling machine (10) comprises feed means (17) able to make each product to be worked (18) advance axially along a longitudinal axis (X) thereof, and a rotary head (12), which is provided with a central through cavity (13), in which said product to be worked (18) is able to run, and is able to rotate with respect to a fixed support (11), coaxially with said longitudinal axis (X), commanded by first motor means (M1), and wherein said tools (15) are mounted on said rotary head (12) and associated with corresponding adjustment units (16), comprising a step of making said rotary head (12) and said tools (15) rotate by means of said first motor means (M1) and simultaneously of axially feeding said product to be worked (18) by means of said feed means (17), **characterized in that** it also comprises the following steps:
- detecting, downstream of said tools (15), the actual diameter of the worked product (18) and sending the data to a control unit (50) which compares the data with the value of the preset diameter;
- selectively activating a radial adjustment device of the tools (15) so that a second motor means (M2) drives said adjustment units (16), by means of a kinematic-differential unit (101), also while said rotary head (12) and said tools (15) are rotating.

## Patentansprüche

1. Einstellvorrichtung zur Radialeinstellung von Werkzeugen (15) in einer Schälmaschine (10) für Stangen, Rohre oder ähnlich längliche zu bearbeitende Produkte (18), wobei die Schälmaschine (10) umfasst:
ein Vorschubmittel (17), das jedes zu bearbeitende Produkt (18) entlang dessen Längsachse (X) axial vorschieben kann, und
einen Rotationskopf (12), der mit einem zentralen Durchgangsloch (13) versehen ist, in dem das zu bearbeitende Produkt (18) durchlaufen kann, und der, gesteuert durch eine erste Motoreinrichtung (M1), dazu fähig ist, bezüglich einer festen Halterung (11) koaxial zur Längsachse (X) zu rotieren, und wobei
die Werkzeuge (15) auf dem Rotationskopf (12) montiert und mit entsprechenden Einstelleinheiten (16) verknüpft sind, wobei
die Vorrichtung eine zweite Motoreinrichtung (M2) umfasst, die die Einstelleinheiten (16) antreiben kann,
wobei die Vorrichtung ferner umfasst:
eine kinematische Differentialeinheit (101), die zwischen der zweiten Motoreinrichtung (M2) und den Einstelleinheiten (16) eingefügt ist, und
eine Steuereinrichtung (50), die mit mindestens der zweiten Motoreinrichtung (M2) verknüpft ist, um die selektive und gleichzeitige Aktivierung der Einstelleinheiten (16) zu bewirken und die mikrometrische Einstellung der Radialposition der Werkzeuge (15) bezüglich der Längsachse (X) auch während eines Rotierens des Rotationskopfes (12) durchzuführen,
**dadurch gekennzeichnet, dass**
die Einstelleinheit (16) umfasst:
einen Schieber (20), der bezüglich der Längsachse (X) radial bewegbar ist und auf dem eines der Werkzeuge (15) montiert ist,
eine Kalibrierschraube (21), und
eine keilförmige Anlagefläche (22), die mit dem Schieber (20) verbunden ist, und auf der die Kalibrierschraube (21) geschraubt ist, und dadurch, dass
eine Rotation der zweiten Motoreinrichtung (M2) an die Kalibrierschraube (21) mittels Zahnräder (62, 61, 82, 83, 31, 32, 35, 36) übertragen wird, um die Kalibrierschraube (21) nach links oder nach rechts in Rotation zu versetzen, wodurch die Anlagefläche (22) und daraufhin der Schieber (20) und das jeweilige Werkzeug (15) bewegt wird, woraus sich eine Veränderung im Durchmesser des Produkts (18) ergibt.

2. Einstellvorrichtung nach Anspruch 1, **dadurch gekennzeichnet, dass** die zweite Motoreinrichtung einen bürstenlosen Elektromotor (M2) umfasst.

3. Einstellvorrichtung nach Anspruch 1 oder 2, **dadurch gekennzeichnet, dass** die kinematische Differentialeinheit (101) ein Differentialelement (56) umfasst, das sowohl mit der ersten Motoreinrichtung (M1), um normal im Gleichlauf mit dem Rotationskopf (12) zu rotieren, als auch mit der zweiten Motoreinrichtung (M2) verbunden ist.

4. Einstellvorrichtung nach Anspruch 3, **dadurch gekennzeichnet, dass** die zweite Motoreinrichtung (M2) selektiv auf die Innenzahnräder des Differentialelements (56) wirken kann, um dem Ausgangselement des Differentials (46) Umdrehungen hinzuzufügen oder abzuziehen und um die Einheiten (16) zum Einstellen der Werkzeuge (15) zu aktivieren.

5. Einstellvorrichtung nach einem der vorhergehenden Ansprüche, **dadurch gekennzeichnet, dass** die kinematische Differentialeinheit (100) mehrere der Zahnräder umfasst, die miteinander in Eingriff stehen und Übertragungsverhältnisse aufweisen, sodass eine festgelegte mikrometrische Radialverrückung der Werkzeuge (15) einem festgelegten Rotationswinkel der zweiten Motoreinrichtung (M2) entspricht.

6. Einstellvorrichtung nach einem der vorhergehenden Ansprüche, **dadurch gekennzeichnet, dass** die Steuereinrichtung (50) mit einem Mittel zum Erfassen des aktuellen Durchmessers des bearbeiteten Produkts (18) verknüpft ist, um automatisch auf der zweiten Motoreinrichtung (M2) einzugreifen und die Radialposition der Werkzeuge (15) einzustellen, bis der aktuelle Durchmesser des bearbeiteten Produkts (18) im Wesentlichen gleich dem voreingestellten Durchmesser wird.

7. Einstellvorrichtung nach Anspruch 6, **dadurch gekennzeichnet, dass** das Erfassungsmittel eine Laservorrichtung (65) umfasst, die in Übereinstimmung mit der Oberfläche des zu bearbeitenden Produkts (18) flussabwärts der Werkzeuge (15) angeordnet ist.

8. Verfahren zur Radialeinstellung von Werkzeugen (15) in einer Schälmaschine (10) für Stangen, Rohre oder ähnlich längliche zu bearbeitende Produkte (18), durch Verwendung einer in Anspruch 1 beanspruchten Einstellvorrichtung, wobei die Schälmaschine (10) umfasst:
ein Vorschubmittel (17), das jedes zu bearbeitende Produkt (18) axial entlang dessen Längsachse (X) vorschieben kann, und
einen Rotationskopf (12), der mit einem zentralen Durchgangsloch (13) versehen ist, in dem das zu bearbeitende Produkt (18) durchlaufen kann, und der, gesteuert durch eine erste Motoreinrichtung (M1), dazu fähig ist, bezüglich einer festen Halterung (11) koaxial zur Längsachse (X) zu rotieren, und wobei
die Werkzeuge (15) auf dem Rotationskopf (12) montiert sind und mit entsprechenden Einstelleinheiten (16) verknüpft sind,
wobei das Verfahren einen Schritt umfasst, in dem der Rotationskopf (12) und die Werkzeuge (15) mittels der ersten Motoreinrichtung (M1) rotiert werden, und in dem gleichzeitig das zu bearbeitende Produkt (18) mittels des Vorschubmittels (17) axial vorgeschoben wird,
**dadurch gekennzeichnet, dass** das Verfahren ferner die nachfolgenden Schritte umfasst, in denen:
flussabwärts der Werkzeuge (15) der aktuelle Durchmesser des bearbeiteten Produkts (18) erfasst wird, und die Daten einer Steuereinrichtung (50) gesendet werden, die die Daten mit dem Wert des voreingestellten Durchmessers vergleicht;
eine Radialeinstellvorrichtung der Werkzeuge (15) selektiv aktiviert wird, sodass eine zweite Motoreinrichtung (M2) die Einstelleinheiten (16) mittels einer kinematischen Differentialeinheit (101) auch während eines Rotierens des Rotationskopfs (12) und der Werkzeuge (15) antreibt.

## Revendications

1. Dispositif de réglage pour le réglage radial des outils (15) dans une dérouleuse (10) pour barres, tubes ou produits oblongs similaires destinés à être travaillés (18), dans lequel ladite dérouleuse (10) comprend un moyen d'alimentation (17) capable de faire avancer axialement chaque produit destiné à être travaillé (18) le long d'un axe longitudinal (X) de celle-ci, et une tête rotative (12), qui est dotée d'une cavité traversante centrale (13), que ledit produit destiné à être travaillé (18) peut traverser, et qui peut tourner par rapport à un support fixe (11), coaxialement avec ledit axe longitudinal (X), commandée par un premier moyen de moteur (M1), et dans lequel lesdits outils (15) sont montés sur ladite tête rotative (12) et associés à des unités de réglage correspondantes (16), ledit dispositif comprenant un second moyen de moteur (M2), capable d'entraîner lesdites unités de réglage (16), le dispositif comprenant en outre une unité de cinématique/différentiel (101) intercalée entre ledit second moyen de moteur (M2) et lesdites unités de réglage (16) et un moyen de commande (50) associé au moins avec ledit second moyen de moteur (M2), de façon à provoquer l'activation sélective et simultanée desdites unités de réglage (16) et à effectuer le réglage micrométrique de la position radiale desdits outils (15) par rapport audit axe longitudinal (X), également pendant que ladite tête rotative (12) est en rotation, **caractérisé en ce que** chacune desdites unités de réglage (16) comprend un coulisseau (20), mobile radialement par rapport audit axe longitudinal (X) et sur lequel l'un desdits outils (15) est monté, une vis calibrée (21) et un poinçon en forme de coin (22) raccordé au coulisseau (20) et sur lequel la vis calibrée (21) est vissée, et **en ce qu'**une rotation dudit second moyen de moteur (M2) est transmise à ladite vis calibrée (21) au moyen de roues dentées (62, 61, 82, 83, 31, 32, 35, 36) de façon à mettre en rotation ladite vis calibrée (21) vers la gauche ou vers la droite, en déplaçant ainsi le poinçon (22) et, ensuite, le coulisseau (20) et l'outil relatif (15), avec une variation consécutive du diamètre du produit (18).

2. Dispositif de réglage selon la revendication 1, **caractérisé en ce que** ledit second moyen de moteur comprend un moteur électrique sans balai (M2).

3. Dispositif de réglage selon la revendication 1 ou 2, **caractérisé en ce que** ladite unité de cinématique/différentiel (101) comprend un organe différentiel (56), raccordé audit premier moyen de moteur (M1), afin de tourner normalement en synchronisme avec ladite tête rotative (12), et également audit second moyen de moteur (M2).

4. Dispositif de réglage selon la revendication 3, **caractérisé en ce que** ledit second moyen de moteur (M2) peut agir sélectivement sur les pignons internes dudit organe différentiel (56), afin d'ajouter ou de soustraire des tours à l'organe de sortie dudit différentiel (56) et d'activer lesdites unités (16) pour régler lesdits outils (15).

5. Dispositif de réglage selon l'une quelconque des revendications précédentes, **caractérisé en ce que** ladite unité de cinématique/différentiel (100) comprend une pluralité desdites roues dentées, venant en prise les unes avec les autres et ayant des rapports de transmission tels qu'un déplacement radial micrométrique déterminé desdits outils (15) correspond à un angle de rotation déterminé dudit second moyen de moteur (M2).

6. Dispositif de réglage selon l'une quelconque des revendications précédentes, **caractérisé en ce que** ledit moyen de commande (50) est associé à un moyen de détection du diamètre réel dudit produit travaillé (18), afin d'intervenir automatiquement sur ledit second moyen de moteur (M2) et de régler la position radiale desdits outils (15), jusqu'à ce que le diamètre réel dudit produit travaillé (18) devienne sensiblement égal au diamètre préétabli.

7. Dispositif de réglage selon la revendication 6, **caractérisé en ce que** ledit moyen de détection comprend un dispositif laser (65) disposé en correspondance avec la surface dudit produit étant travaillé (18), en aval desdits outils (15).

8. Procédé de réglage radial des outils (15) dans une dérouleuse (10) pour barres, tubes ou produits oblongs similaires destinés à être travaillés (18), en utilisant un dispositif de réglage selon la revendication 1, dans lequel ladite dérouleuse (10) comprend un moyen d'alimentation (17) capable de faire avancer axialement chaque produit destiné à être travaillé (18) le long d'un axe longitudinal (X) de celle-ci, et une tête rotative (12), qui est dotée d'une cavité traversante centrale (13), que ledit produit destiné à être travaillé peut traverser, et qui peut tourner par rapport à un support fixe (11), coaxialement avec ledit axe longitudinal (X), commandée par un premier moyen de moteur (M1), et dans lequel lesdits outils (15) sont montés sur ladite tête rotative (12) et associés à des unités de réglage correspondantes (16), comprenant une étape de mise en rotation de ladite tête rotative (12) et desdits outils (15) au moyen dudit premier moyen de moteur (M1) et d'alimentation axiale simultanée dudit produit destiné à être travaillé (18) au moyen dudit moyen d'alimentation (17), **caractérisé en ce qu'**il comprend en outre les étapes suivantes :
- la détection, en aval desdits outils (15), du diamètre réel du produit travaillé (18) et l'envoi des données à une unité de commande (50) qui compare les données à la valeur du diamètre préétabli ;
- l'activation sélective d'un dispositif de réglage radial des outils (15) de sorte qu'un second moyen de moteur (M2) entraîne lesdites unités de réglage (16), au moyen d'une unité de cinématique/différentiel (101), également pendant que ladite tête rotative (12) et lesdits outils (15) sont en rotation.
